# EUROPEAN PATENT SPECIFICATION

(11) **EP 3 934 411 B1**
(45) Date of publication and mention of the grant of the patent: **20.07.2022**
(21) Application number: 20716184.5
(22) Date of filing: 05.03.2020
(51) Int. Cl.: A01G 9/24, A01G 31/06

(54) **A VERTICAL FARM SYSTEM FOR THE CULTIVATION OF VEGETABLE PRODUCTS AND METHOD FOR PRODUCING A VERTICAL FARM SYSTEM**
SYSTEM FÜR VERTIKALE LANDWIRTSCHAFT ZUR KULTIVIERUNG VON PFLANZLICHEN PRODUKTEN UND VERFAHREN ZUR HERSTELLUNG EINES SYSTEMS FÜR VERTIKALE LANDWIRTSCHAFT
SYSTÈME DE FERME VERTICALE POUR LA CULTURE DE PRODUITS VÉGÉTAUX ET PROCÉDÉ DE PRODUCTION D'UN SYSTÈME DE FERME VERTICALE

(30) Priority: 05.03.2019 IT 201900003167
(43) Date of publication of application: 12.01.2022
(73) Proprietor: ZERO SRL, 33170 Pordenone (IT)
(72) Inventor: ALESSIO, Andrea, 33170 Pordenone (IT); MODESTO, Daniele, 33170 Pordenone (IT)
(74) Representative: Zamprogno, Bruno
(86) International application number: PCT/IB2020/051917
(87) International publication number: WO 2020/178781

(56) References cited:
- US-A1- 2011 232 186

## Description

### PRIORITY CLAIM

This application claims priority from Italian Patent Application No. 102019000003167 filed on 05/03/2019.

### TECHNICAL FIELD

The present invention relates to a vertical farm system according to claim 1 (vertical-farm) for the production of vegetable products with a modular structure, i.e. a structure that is easy to assemble/disassemble, and a method for producing said modular vertical farm system according to claim 9.

### BACKGROUND ART

As is well known, vertical farm systems (verticalfarms) are structured to implement cultivation processes of vegetable products, such as plants/vegetables, at high density, under essentially artificial conditions and in soil/ground-free environments, generally closed environments.

While, on the one hand, vertical farm systems have several advantages, such as logistical convenience in relation to retailers, high product quality, absence of pesticides, and the ability to accurately plan production, on the other hand, they have technical problems that have not been completely solved yet.

One of the main problems of vertical farm systems, especially large ones, is represented by their economic sustainability.

It is well known that the economic sustainability of a vertical farm system depends essentially on the following cost factors: the cost of production per cultivated square metre (CAPEX), which is the value obtained by dividing the total cost for producing the vertical farm system by the cultivated area (articulated on several levels); the cost associated with total production time, calculated from the beginning of the design to the beginning of cultivation; and the management cost (generally referred to as OPEX), which represents the sum of the operating costs of a vertical farm system which in turn depend mainly on the cost of the staff and the cost of electricity.

So far, the most widespread vertical farm systems are those of large size and are characterised by particularly high cost factors that strongly affect their economic sustainability, making them suitable, from an economic point of view, only for the cultivation of vegetable products with very high marginality. However, this represents a major limitation as it excludes other types of vegetable products with lower marginality from this cultivation process.

However, there is a need for arranging vertical farm systems that drop the cost factors listed above so as to ensure that producers are able to achieve acceptable economic sustainability even in the cultivation of vegetable products marketed at lower marginalities, comparable to what can be achieved by cultivating them in traditional greenhouses.

US 2011/0232186 A1 describes a semi-automatic vegetable production system provided with a grow module comprising: a container that is easily transportable from one area to another, and a single container that can be slidingly housed in the container and is internally provided with: grow cells, a lighting system and a ventilation unit comprising in turn respective equipment modules.

The system described in US 2011/0232186 has the technical problem of having an extremely limited production capacity. In fact, this system is suitable to be used by users with a low level of agronomic knowledge in order to obtain small quantities of products, and is unsuitable to be used at industrial level in order to obtain high quantities of vegetable products.

In particular, in said system, the size of the container is limited, i.e. it cannot exceed the limits associated with the dimensions of the transportation container. Thus, the space available around the container to house the system grow cells is reduced/limited.

In addition, in the system described in US 2011/0232186, the positioning/presence of the equipment modules inside the container further reduces the space available to house the grow cells, thereby further reducing the system production capacity.

A further technical problem of said system is that the reduced space available inside the container is a critical element, also with regard, on the one hand, to the maximum number of equipment modules that can be housed in the container, and on the other hand, to the choice and therefore the possibility of using them in terms of type, power and therefore performance. In fact, an increase in the number of modules and/or the use of modules with higher power/performance results in an increase in their overall dimensions which causes a further reduction in the space available for the grow cells and therefore a reduction in the production capacity of the system.

In addition, the housing of the equipment modules and the grow cells within the same container represents an additional criticality from the point of view of the risk of contamination of vegetable products. It often occurs that operators operate on equipment modules and accidentally introduce fungi and bacteria that contaminate the grow cells compromising cultivation.

Thus, the Applicant carried out an exhaustive study with the aim of identifying a solution which, on the one hand, allows to meet the above requirements and, on the other hand, overcomes the technical problems described above. Hence, the object of the present invention is to provide a modular vertical farm system and a method to produce a modular vertical farm system, which are particularly simple and economical.

### DISCLOSURE OF INVENTION

This object is achieved by the fact that it relates to a vertical farm system according to claim 1 and to a method for producing a vertical farm system as defined in claim 9.

### BRIEF DESCRIPTION OF THE DRAWINGS

The present invention will now be described with reference to the accompanying drawings, illustrating a non-limiting implementation example:
- Figure 1 schematically shows a vertical farm system,
- Figure 2 is a schematic perspective view with parts removed for clarity of an embodiment of a cultivation module of the vertical farm system shown in Figure 1;
- Figure 3 is a schematic perspective view with parts removed for clarity of an example of a control module of the vertical farm system shown in Figure 1;
- Figure 4 schematically shows a production alternative of the vertical farm system shown in Figure 1;
- Figure 5 schematically shows the operational steps of the method for producing the vertical farm system
- Figure 6 schematically shows a production alternative of the vertical farm system.

### BEST MODE FOR CARRYING OUT THE INVENTION

The present invention will now be described in detail with reference to the attached Figures to allow a person skilled in the art to produce and use the same.

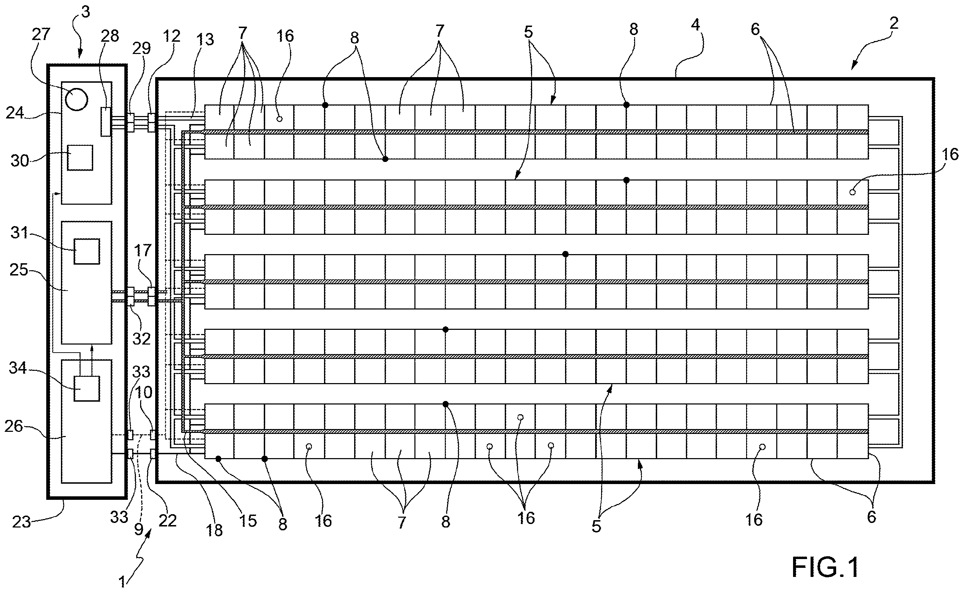

With reference to Figure 1, reference 1 refers schematically as a whole to a modular vertical farm system of vegetable products (Vertical Farm System), which can be easily modulated.

The system 1 comprises at least one cultivation module 2 designed to implement a plan for the cultivation of vegetable products. The system 1 comprises at least one control module 3 configured to control the devices and/or systems (described in detail below) present in the vertical cultivation module 2 on the basis of plans for vertical cultivation of vegetable products.

The cultivation module 2 internally bounds an artificial cultivation environment with a vertical, soil-free or above-ground support architecture for the intensive growth of vegetable products under controlled environmental conditions.

It should be understood that in the following discussion the term "soil-free" means a system that involves the cultivation of vegetable products without any uses of support layers/substrates that are designed to support the roots and are based on: soil/loam and/or inorganic and/or similar granular compounds.

The cultivation plan implemented in the artificial cultivation environment of the cultivation module 2, under the control of the control module 3, essentially provides: control operations of the artificial lighting generated within the artificial environment; control operations of aeroponic and/or hydroponic-type fertigation to feed the vegetable products; control operations of climate control in the artificial environment, i.e. at least temperature control and humidity control.

With reference to Figure 1, the cultivation module 2 comprises a cultivation container 4, which internally contains the above-mentioned artificial cultivation environment. An "artificial cultivation environment" means a production soil-free/over-ground area/space (grow area), in which the cultivation plan is carried out.

It is also understood that the term "vegetable product" preferably means any vegetable products for food use, such as, for example, salads, vegetables, aromatic herbs, or the like. It should be understood, however, that the above invention is not limited to vegetable products for food use of the above-mentioned type by way of example, but can also be applied to the cultivation of other types of vegetable products generally cultivated in traditional "in-soil" greenhouses, such as flowers, plants or the like. The cultivation container 4 is closed and can have, for example, a suitably parallelepipedal shape that internally bounds the artificial cultivation space/environment.

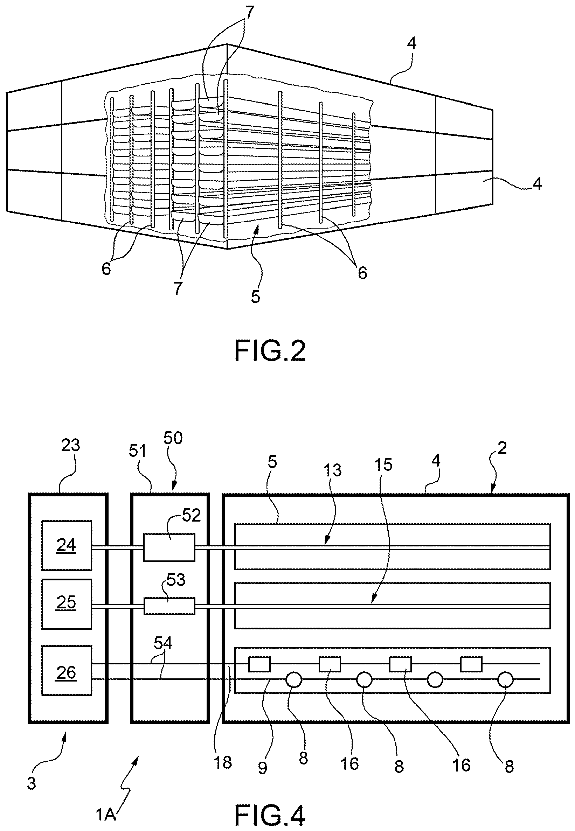

According to a suitable illustrative embodiment shown in Figure 2, the walls of the cultivation container 4 are formed by a plurality of modular elements or panels positioned side by side and connected to each other in a well-known way. Preferably, the modular elements or panels can comprise thermally insulating panels so that the interior space of the cultivation container 4 is suitably insulated.

With reference to Figures 1 and 2, the cultivation module 2 also comprises a plurality of modular cultivation structures 5. Preferably, the cultivation modular structures 5 have a vertical architecture and are of modular type. The modular cultivation structures 5 are arranged inside the cultivation container 4 and comprise modular cultivation trays 7 which are designed to house said vegetable products and/or seeds thereof during the growing process. The modular cultivation structures 5 are easy to assemble/disassemble and comprise support frames 6 on which the horizontal cultivation shelves/trays 7 are assembled. The cultivation shelves/trays 7 are arranged in frames 6 so as to form a series of vertical columns in which the shelves/trays 7 are spaced one above each other on several levels. Frames 6 can be formed by metal profiles connected to each other so as to form support columns and crossbars for cultivation shelves/trays 7.

It should be understood that frames 6 and shelves/trays 7 of the cultivation structures 5 can be suitably modular and have an architecture which is adapted for vertical cultivation. Frames 6 and shelves/trays 7 can be structured and arranged adjacent to each other in the cultivation container 4 so as to form parallel rows adapted to perform aeroponic and/or hydroponic fertigation processes.

The cultivation module 2 also comprises sensor devices 8 (only some of which are shown schematically in Figure 1), which are arranged inside the cultivation container 4, preferably at the cultivation structures 5 to determine/detect predefined cultivation parameters associated with the implemented cultivation process. It is understood that the number and position/distribution of sensor devices 8 within the cultivation container 4 can depend on the type of parameter measured, and/or the type of vegetable product to be monitored, and/or the position and shape of the bench/tray 7.

Preferably, the sensor devices 8 can be configured to carry out a communication, in the form of data/signals indicative of the cultivation parameters through a wired communication network 9. The communication network 9 is wired inside the cultivation container 4 to be connected to the sensor devices 8. The communication network 9 is also connected to the electric connection connectors 10. The electric connection connectors 10 can preferably be located outside the cultivation container 4.

It is understood that, in addition or alternatively, one or more sensor devices 8 can be configured to carry out a wireless communication of the cultivation parameters, for example, a wireless communication or the like. In this configuration, it can be envisaged that the cultivation module 2 comprises an electronic communication device, e.g. a gateway (not shown), capable to put the sensor devices 8 into communication with external wireless electronic communication devices.

According to a possible embodiment, the cultivation parameters measured by the sensor devices 8 can comprise, for example, one or more of the following parameters: parameters indicating humidity, parameters indicating temperature, parameters indicating carbon dioxide.

The cultivation module 2 also comprises a fertigation system 13, which is arranged inside the cultivation container 4, and is structured to feed fertilizer-based substances to the cultivated vegetable products in a selective and controlled way in terms of quantity and/or type and/or feeding times.

The fertigation system 13 comprises an aeroponic and/or hydroponic fertigation system which is equipped with multiple fertigation conduits extending inside the cultivation container 4. The aeroponic and/or hydroponic fertigation system can comprise a closed circuit run by substances in a liquid state and one or more outlets arranged along the circuit and structured to supply these substances in an aeriform and/or liquid state, respectively, for example by emission nozzles. The distribution (layout) of the fertigation ducts forming the fertigation system 13 can vary depending on the cultivation structure 5 and/or the position of the shelves/trays 7 in the cultivation environment.

The fertigation system circuit 13 can comprise supply and return branches connected to respective hydraulic connectors 12. The hydraulic connectors 12 can be arranged outside the cultivation container 4. The fertigation system 13 can also be equipped with electrically operated valves, e.g. electrovalves (not shown) to selectively control the supply of substances to the shelves/trays 7. The valves can be arranged along the fertigation ducts and/or near the nozzles, and can be electrically operated in order to open/close.

The cultivation module 2 can also comprise an air distribution system 15, which is arranged inside the cultivation container 4 and is designed to receive conditioned air and convey it into said cultivation container 4. The air distribution system 15 can comprise air ducts, i.e. aeraulic ducts, which branch into the cultivation container 4 to provide conditioned air at the shelves/trays 7. The aeraulic ducts can comprise air supply and return branches and be provided with respective air canalization aeraulic connectors 17.

In addition, the cultivation module 2 comprises lighting devices 16, which are arranged inside the cultivation container 4. The lighting devices 16 (only some of which are shown in Figure 1) are configured to light the cultivation environment in a controlled way according to preset lighting parameters. The preset lighting parameters can be indicative of the intensity and/or the wavelength of the light. The lighting devices 16 can comprise electric lighting sources, e.g. LED lighting sources or similar electric sources, and can be arranged at the shelves/trays 7, for example above them, so that the underlying grow area can be lit.

The lighting devices 16 can be electrically connected to an electric control circuit 18. The electric control circuit 18 can, for example, comprise one or more control buses, through which the lighting devices 16 and/or the valves of the fertigation system 13 receive respective control signals. The electric control circuit 18 extends inside the cultivation container 4 to electrically connect the lighting devices 16 and the valves of the fertigation system 13 to electric connectors 22. Preferably, the electric connectors 22 can be arranged outside the cultivation container 4.

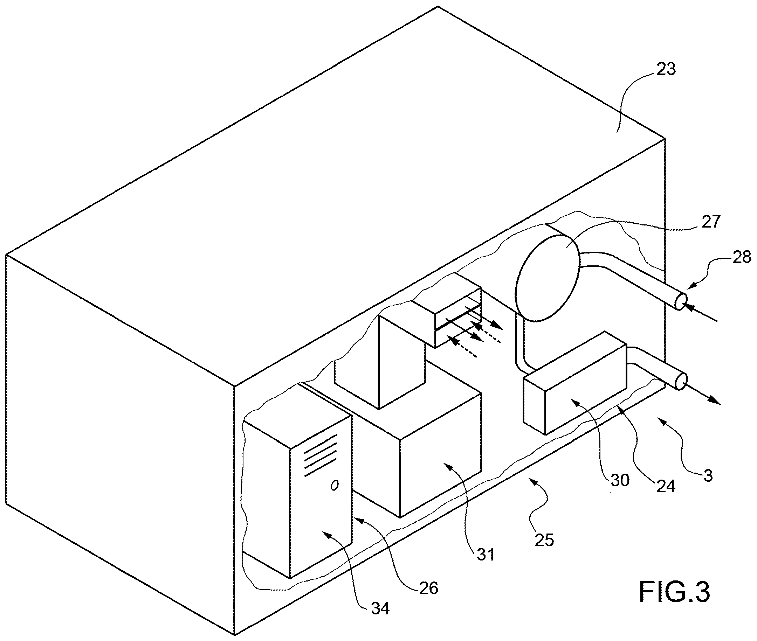

With reference to Figures 1 and 3, the control module 3 comprises a closed box or case of preset size, consisting of a control container 23. In use, the control container 23 and cultivation container 4 are independent and are kept in a side by side adjacent position. The control container 23 is completely separated from the cultivation container 4. In other words, the control container 23 is outside the cultivation container 4.

The control container 23 can have a suitable parallelepipedal shape. The control container 23 can be suitably sized to be arranged on, and transported by, motor vehicles such as trucks, trains, ships. For example, the control container 23 can comprise a container that can be transported by a truck.

Inside the control container 23, the control module 3 also comprises: a fertigation unit 24, a climate control unit 25, and an electronic control system 26.

According to a possible embodiment, the fertigation unit 24 can comprise one or more tanks 27 containing the liquid substances used for fertigation, i.e. fertiliser-based substances. The fertigation unit 24 can also comprise a hydraulic connection circuit 28 provided with hydraulic ducts connecting the tanks 27 to hydraulic connectors 29. The hydraulic connectors 29 are preferably arranged outside the control container 23. In use, the hydraulic connectors 29 are configured to be hydraulically connected to respective hydraulic connectors 12 of the fertigation system 13 in order to provide the hydraulic connectors 12 with fertigation substances, preferably in liquid state, designed to circulate in the circuit of the fertigation system 13.

The fertigation unit 24 can also comprise electrically operated valves, electrovalves (not shown), which can be arranged along the hydraulic ducts of the hydraulic connection circuit 28.

The fertigation unit 24 can also comprise hydraulic pumping equipment 30 which can be electrically controlled so that the fertigation substances are selectively supplied to the fertigation system 13 through the connection between the hydraulic connectors 29 and 12, also by valve driving.

The climate control unit 25 can comprise an electric machine 31 for air treatment. The electric machine 31 can be hydraulically connected to connectors 32. Preferably, the connectors 32 are arranged outside the control container 23 and are connected, in use, to the connectors 17 of the air distribution system 15. The electric machine 31 can comprise, for example, a heat pump or any similar climate control equipment designed to control the temperature and/or humidity of the air to be provided to the air distribution system 15.

The electronic control system 26 can comprise at least one electronic control device 34. The electronic control device 34 can be configured to control the fertigation unit 24, the climate control unit 25, the valves, the lighting devices 16 and the sensor devices 8. The electronic control device 34 can be provided with electric connectors 33 for connection to the electric control circuit 18 and to the communication network 9. The electric connectors 33 are preferably arranged outside the control container 23 and are electrically connected, in use, to the electric connectors 22 and 10.

The electronic control device 34 can comprise for example one or more servers configured to store a cultivation plan containing the operations/commands and/or parameters needed to implement the cultivation process. The cultivation plan can be of a known type, and since it is not the object of the invention, it will not be further described, apart from specifying that it can be configured for: receiving the cultivation parameters, the cultivation recipe being indicative of the control operations provided in the cultivation process to be performed, controlling the fertigation unit 24, the climate control unit 25, the lighting devices 16, the valves based on the cultivation recipe and the cultivation parameters which are measured/sensed by the sensor devices 8.

The local server of the electronic control device 34 can communicate with a remote, cloud, system (not shown) to exchange indicative cultivation data with it, for example to receive the cultivation plan and parameters.

According to a possible embodiment, the cultivation container 4 of the vertical cultivation module 2 can be sized to a height ranging from approximately 3 metres to approximately 5 metres, a length ranging from approximately 30 metres to approximately 40 metres, and a width ranging from approximately 10 metres to approximately 20 metres.

According to a possible embodiment, the control container of the control module 3 can be sized to a height of about 2.5 meters, a length between about 6 meters and about 12 meters, and a width of about 2.5 meters.

It is understood that the system 1 is not limited to the use of a control module 3 that controls a vertical cultivation module 2 but can have other configurations. For example, the system 1 can comprise a control module 3 which is structured to control two or more vertical cultivation modules 2. In this respect it should be pointed out that, unlike known solutions, the use of a control module 3 is provided with a control container 23 which, besides being independent and separate, i.e. external to the cultivation container 4, is of a size corresponding to those of a transportable container (road, train or ship). Therefore, according to a possible embodiment, the control container 23 can house a plurality (number) of fertigation units 24, a plurality of climate control units 25, and a plurality of electronic control systems 26 corresponding to the number of cultivation modules 4 to be controlled.

According to an alternative or additional embodiment, the control container 23 can house fertigation units 24, climate control units 25, and electronic control systems 26, each of which is of a suitable size to selectively and/or alternately control a plurality of cultivation modules 4.

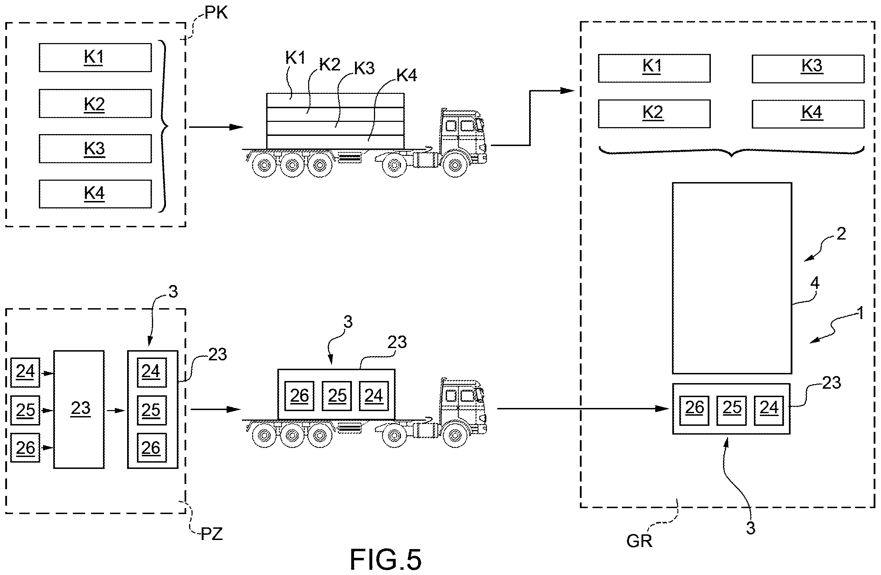

With reference to Figure 5, the method for producing the vertical farm system 1 in a grow area/space GR will be described.

The method comprises the steps of making up, in pre-assembly areas/spaces PK not corresponding to said grow area/space GR: first kits K1 of modular elements adapted to produce said cultivation container 4, second kits K2 of modular elements adapted to produce the cultivation structures 5 with vertical architecture, third kits K3 of modular elements adapted to produce the fertigation system 13, fourth kits K4 of modular elements adapted to produce the air distribution system 15.

Preferably, the first kits of modular elements K1 can comprise panels with a certain size range, suitably made up for transportation, e.g. palletized, and modular metal profiles suitably made up for transportation, e.g. palletized, to produce a container frame 4 to support the panels. Preferably, the second kits of modular elements K2 can comprise the shelves/trays 7 with the same sizes and suitably made up for transportation, for example palletized; and modular metal profiles suitably made up for transportation, for example palletized, to produce the support frame 6 of the shelves. Preferably, the third kits of modular element K3 can comprise the ducts, with a certain size range, suitably made up for transportation, e.g. palletized, and the other hydraulic elements, fittings, valves, etc. required to produce the fertigation system 13. Preferably, the fourth kits of modular elements K4 can comprise the air ducts, with a certain size range, suitably made up for transportation, e.g. palletized, and the other connecting and fastening elements, required to produce the air distribution system 15.

Also, the method comprises the step of transporting the first K1, second K2, third K3 and fourth K4 kits from said pre-assembly areas/spaces PK to said grow area GR. For example, the grow area GR could be inside a building, for example a shed.

Also, the method comprises the step of producing the cultivation container 4 in the grow area GR by assembling the modular elements contained in the first kits K1. Also, the method comprises the step of producing, inside the cultivation container 4, the cultivation structures 5 by the assembly of the modular elements contained in the second kits K2. Also, the method comprises the step of producing, inside the cultivation container 4, the fertigation system 13 by the assembly of the modular elements contained in the third kits K3. Also, the method comprises the step of producing, inside the cultivation container 4, the air distribution system 15 by the modular elements contained in the fourth kits K4.

Also, the method comprises the step of assembling, inside the cultivation container 4, the sensor devices 8, the lighting devices 16, and installing the communication network 9 and the electric control circuit 18.

Also, the method comprises the step of arranging the control container 23, e.g. a container that can be transported from a truck in a pre-assembly area/space PZ not corresponding to said grow space GR.

Also, the method comprises the step of assembling in the pre-assembly area/space PZ inside the control container 23: the fertigation unit 24, the climate control unit 25 and the electronic control system 26.

Also, the method comprises the step of transporting, e.g. by truck or similar vehicles, the control module 3 from the pre-assembly area/space PZ to the grow area/space GR. Also, the method comprises the step of positioning the control container 23 next to the cultivation container 4 in said grow area/space GR.

Also, the method comprises the step of connecting: the fertigation unit 24 to the fertigation system 13 by hydraulic coupling means; the climate control unit 25 to the air distribution system 15 by aeraulic connection ducts, the electronic control system 26 to the communication network 9 and the electronic control circuit 18 by electric connections.

The advantages of the above-described vertical farm system and the method for producing the system are as follows.

The above-described modular architecture using control modules, that on the one hand are completely separated from the cultivation modules, and on the other hand, are adapted to control one or more of the same cultivation modules, has the technical effect of increasing the production capacity of the system making it suitable for industrial uses.

The production of control modules by means of control containers having the size of a transportable container allows to considerably increase the internal space available to house the control units, without affecting the working space of the cultivation containers.

Moreover, the production of control modules by control containers having the size of a container allows greater freedom both from the point of view of the number of units that can be housed in the control container and to what concerns their choice in terms of type, power and thus performance, so as to be able to control a plurality of cultivation modules by a single control module.

In addition, the housing of fertigation units, climate control units and electronic control systems in the control container allows to keep them completely separated and thus isolated from the cultivation container. Such a separation has the technical effect of reducing the risk of transmission of fungi and bacteria that could be carried from the units located in the control container in case of their contamination by operators, to the vegetable products located in the cultivation container separated from the control container.

Moreover, thanks to the modularity of the system, it is possible to produce the latter by means of an industrial process in which a "series" assembly is provided. The design costs are distributed over the entire production and do not burden the individual system. The components of the cultivation and control modules are suitably designed to be integrated into the system, limiting functional redundancies and thus substantially decreasing the costs per cultivated square meter of the system itself.

Also, the modularity of the system allows to considerably decrease the delivery and installation time of the system. The possibility of pre-assembling the control modules in a specific assembly area allows to store readyto-ship units, substantially dropping the delivery time of the system. Also, the modularity of the system allows to simplify its installation in the grow area since it does not require the presence of technical staff in the area itself. Also, the modularity of the system allows to install the latter in vacant industrial spaces, for example in disused industrial warehouses, without any structural interventions on them. It is also possible to set up a system provided with several cultivation modules, even in physically separate spaces. Each of the cultivation modules can suitably operate in an independent way. The combination of several cultivation modules allows to quickly have a commercially scalable production capacity with reorganization flexibility according to the demand.

The embodiment shown in Figure 4 relates to a system 1A, which is similar to system 1, and whose component parts will be indicated, where possible, by the same reference numbers indicating corresponding parts of the system 1.

The system 1A differs from system 1 in that it is provided with a connection module 50 which is provided with a connection container 51 designed to be coupled to a wall of the cultivation container 4. Preferably the connection container 51 can contain:
connection and distribution ducts 52 arranged to be connected to the fertigation system 13, aeraulic connection ducts 53 arranged to be connected to the air distribution system inputs 15, electric wiring 54 arranged to connect the electronic control system 26 to the communication network 9 and to the electronic control circuit 18.

The connection module 50 is arranged separately from and outside the cultivation container 4 of the cultivation module 2. The connection module 50 is also arranged separately from and outside the control container 23 of the control module 3.

The connection module 50 has the technical effect of greatly reducing the installation times of system 1. In particular, the connection and distribution ducts 52, the aeraulic connection ducts 53, and the electric wiring 54 are pre-assembled in the connection module 50. The pre-assembled connection module 50 in the pre-assembly area/space PZ is then transported to the grow area GR where it is quickly assembled through a simple connection to the cultivation module and the control module.

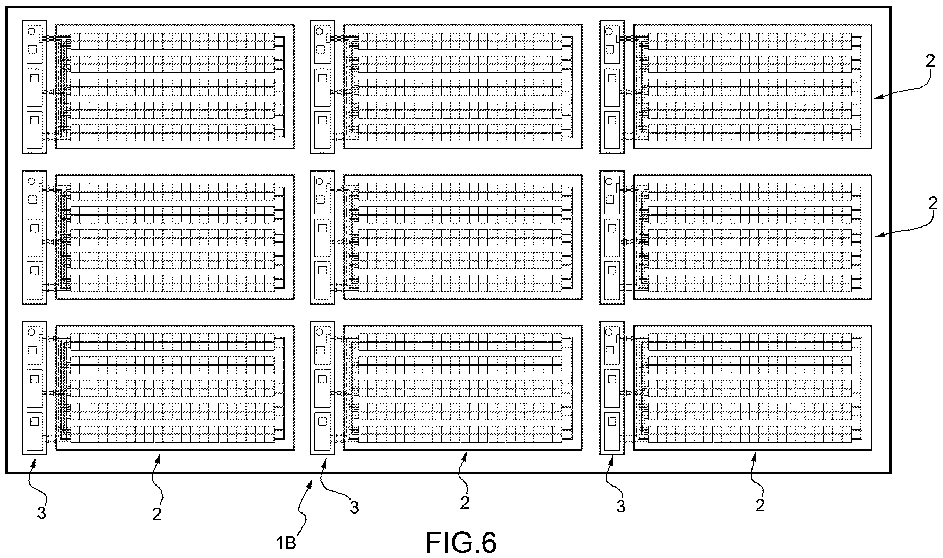

The embodiment shown in Figure 6 relates to a system 1B, which is similar to system 1, and whose component parts will be indicated, where possible, by the same reference numbers indicating corresponding parts of system 1.

System 1B differs from system 1 in that it is provided with several control modules 3 connected to respective cultivation modules 2 within a common grow area GR.

## Claims

1. A modular vertical farm system for no-soil cultivation (1)(1A)(1B) of vegetable products, **characterized in that** it comprises at least a cultivation module (2) and at least a control module (3), wherein:
said cultivation module (2) comprises:
an approximately parallelepipedal shaped, closed cultivation container (4), which internally delimits an artificial cultivation space/environment, inside which a process for no-soil cultivation of vegetable products is performed,
modular cultivation structures (5) with vertical architecture, which are arranged inside said cultivation container (4) and comprise a plurality of modular cultivation trays (7), which are designed to house said vegetable products and/or the relative seeds during the growing process,
said cultivation structures (5) further comprise modular support frames (6) which are arranged inside said cultivation container (4) and structured to support said cultivation trays (7) one above the other, in horizontal positions, reciprocally spaced so as to form vertical columns of shelves,
a modular fertigation system (13) which is arranged inside said cultivation container (4) and is structured to receive fertiliser-based substances and to selectively feed said substances to said cultivation trays (7),
lighting devices (16) which are arranged inside said cultivation container (4) at said cultivation trays (7) to light said vegetable products,
an air distribution system (15), which is arranged inside said cultivation container (4) and is designed to receive conditioned air and convey it into said cultivation container (4),
sensor devices (8), which are arranged inside said cultivation container (4) at said cultivation trays (7) and are configured to provide data/signals indicative of cultivation parameters controlled during the growing process,
said control module (3) comprises:
an approximately parallelepipedal shaped closed control container (23), which is arranged outside said cultivation container (4) in a position approximately adjacent to said cultivation container (4) so that it is separated therefrom,
the control container (23) internally containing:
a fertigation unit (24), designed to supply said fertilizer-based substances, a climate control unit (25) designed to supply conditioned air, and an electronic control system (26),
said system (1) further comprising:
hydraulic connection means (12)(29) to connect said fertigation unit (24) to said fertigation system (13),
aeraulic connection means (17)(32) to couple said climate control unit (25) to said air distribution system (15),
electric connection means (10)(22)(33) to electrically connect said electronic control system (26) to said sensor devices (8) and to said lighting devices (16),
said control container (23) and said cultivation container (4) are independent and are kept in a side by side adjacent position.

2. The modular system according to claim 1, further comprising a connection module (50) provided with a closed connection container (51) which is interposed between said cultivation container (4) and said control container (23) outside them and contains: said hydraulic connection means (12)(29), aeraulic connection means (17)(32) and said electric connection means (10)(22)(33).

3. The modular system according to any one of the preceding claims, wherein said cultivation container (4) has a height ranging from approximately 3 metres to approximately 5 metres, and/or a length ranging from approximately 30 metres to approximately 4 metres, and/or a width ranging from approximately 10 metres to approximately 20 metres.

4. The modular system according to any one of the preceding claims, wherein said control container (23) has a height of approximately 2.5 metres, and/or a length ranging from approximately 6 metres to approximately 12 metres, and/or a width of approximately 2.5 metres.

5. The modular system according to any one of the claims from 1 to 3, wherein said control container (23) is structured and sized to be easily arranged on, and transported by means of, motor vehicles.

6. The modular system according to any one of the preceding claims, wherein said fertigation system (13) and said fertigation unit (24) are an aeroponic fertigation unit and/or a hydroponic fertigation unit.

7. The modular system according to any one of the preceding claims, wherein said cultivation parameters comprise: parameters indicative of the humidity, and/or parameters indicative of the temperature, and/or parameters indicative of the carbon dioxide.

8. The modular system according to any one of the preceding claims, comprising a control module (3) and two or more cultivation modules (2); hydraulic connection means (12)(29) to connect said fertigation unit (24) of said control module (3) to said fertigation system (13) of each said cultivation module (2),
aeraulic connection means (17)(32) to couple said climate control unit (25) of said control module (3) to said air distribution system (15) of each said cultivation module (2),
electric connection means (10)(22)(33) to electrically connect said electronic control system (26) of said control module (3) to said sensor devices (8) and to said lighting devices (16) of each said cultivation module (2).

9. A method for producing a modular vertical farm system (1) to cultivate vegetable products in a grow area/space (GR), produced according to any one of the preceding claims,
the method comprising the steps of:
- making up, in pre-assembly areas/spaces (PK) not corresponding to said grow area/space (GR): first kits of modular elements (K1) for producing said cultivation container (4), second kits of modular elements (K2) for producing said cultivation structures (5) with vertical architecture, third kits of modular elements (K3) for producing said fertigation system (13), fourth kits of modular elements (K4) for producing said air distribution system (15);
- transporting said first kits (K1), second kits (K2), third kits (K3) and fourth kits (K4) of modular elements from the respective pre-assembly areas/spaces (PK) to said grow area (GR);
- providing said cultivation container (4) in said grow area (GR) by assembly of the modular elements of the first kits (K1),
- providing in said cultivation container (4) said cultivation structures (5) by assembly of the modular elements of the second kits (K2),
- providing in said cultivation container said fertigation system (13) by assembly of the modular elements contained in the third kits (K3),
- providing in said cultivation container (4) said air distribution system (15) by assembly of the modular elements contained in the fourth kits (K4).

10. The method according to claim 9, comprising the steps of:
arranging said control container (23) in a pre-assembly area/space (PZ) of the control module not corresponding to said grow area/space (GR);
assembling in said control container (23) of said control module (3): said fertigation unit (24), and/or said climate control unit (25), and/or electronic control system (26);
at the end of the pre-assembly, transporting said control module (3) from said pre-assembly area/space (PZ) of the control module (3) to said grow area/space (GR) and positioning it approximately adjacent to said cultivation container (4),
connecting said fertigation unit (24) to said fertigation system (13) by means of hydraulic coupling means (12) (29);
coupling said climate control unit (25) with said air distribution system (15) by aeraulic connection means (32)(17).

## Patentansprüche

1. Ein modulares vertikales Farmsystem für die bodenlose Kultivierung (1) (1A) (1B) von pflanzlichen Produkten, **dadurch gekennzeichnet, dass** es mindestens ein Kultivierungsmodul (2) und mindestens ein Steuermodul (3) umfasst, wobei das genannte Kultivierungsmodul (2) folgendes umfasst:
einen annähernd parallelepipedförmigen, geschlossenen Kultivierungsbehälter (4), der im Inneren einen künstlichen Kultivierungsraum / eine künstliche Kultivierungsumgebung begrenzt, in dem / der ein Prozess für die bodenlose Kultivierung von pflanzlichen Produkten durchgeführt wird,
modulare Kultivierungsstrukturen (5) mit vertikaler Architektur, die im Inneren besagten Kultivierungsbehälters (4) angeordnet sind und mehrere modulare Kultivierungsschalen (7) umfassen, die so konzipiert sind, dass sie besagte pflanzliche Produkte und / oder die entsprechenden Samen während des Anbauprozesses aufnehmen,
wobei besagte Kultivierungsstrukturen (5) ferner modulare Stützrahmen (6) umfassen, die im Inneren besagten Kultivierungsbehälters (4) angeordnet sind und so strukturiert sind, dass sie besagte Kultivierungsschalen (7) in horizontalen Positionen übereinander stützen, die voneinander beabstandet sind, um vertikale Regalsäulen zu bilden,
ein modulares Fertigationssystem (13), das im Inneren besagten Kultivierungsbehälters (4) angeordnet ist und so strukturiert ist, dass es düngemittelbasierte Substanzen aufnimmt und besagte Substanzen selektiv besagten Kultivierungsschalen (7) zuführt,
Beleuchtungsvorrichtungen (16), die im Inneren besagten Kultivierungsbehälters (4) an besagten Kultivierungsschalen (7) angeordnet sind, um besagte pflanzliche Produkte zu beleuchten,
ein Luftverteilungssystem (15), das im Inneren besagten Kultivierungsbehälters (4) angeordnet ist und so konzipiert ist, dass es klimatisierte Luft aufnimmt und sie in besagten Kultivierungsbehälter (4) befördert,
Sensorvorrichtungen (8), die im Inneren besagten Kultivierungsbehälters (4) an besagten Kultivierungsschalen (7) angeordnet sind und so konfiguriert sind, dass sie Daten / Signale bereitstellen, die auf während des Anbauprozesses gesteuerte Kultivierungsparameter hinweisen,
wobei besagtes Steuermodul (3) folgendes umfasst:
einen annähernd parallelepipedförmigen, geschlossenen Steuerbehälter (23), der außerhalb besagten Kultivierungsbehälters (4) in einer Position annähernd angrenzend an besagten Kultivierungsbehälter (4) angeordnet ist, so dass er davon getrennt ist,
wobei der Steuerbehälter (23) im Inneren folgendes enthält:
eine Fertigationseinheit (24), die so konzipiert ist, dass sie besagte düngemittelbasierte Substanzen zuführt, eine Klimasteuereinheit (25), die so konzipiert ist, dass sie klimatisierte Luft zuführt, und ein elektronisches Steuersystem (26),
wobei besagtes System (1) ferner folgendes umfasst:
hydraulische Verbindungsmittel (12) (29), um besagte Fertigationseinheit (24) mit besagtem Fertigationssystem (13) zu verbinden,
pneumatische Verbindungsmittel (17) (32), um besagte Klimasteuereinheit (25) mit besagtem Luftverteilungssystem (15) zu koppeln,
elektrische Verbindungsmittel (10) (22) (33), um besagtes elektronisches Steuersystem (26) mit besagten Sensorvorrichtungen (8) und mit besagten Beleuchtungsvorrichtungen (16) elektrisch zu verbinden,
wobei besagter Steuerbehälter (23) und besagter Kultivierungsbehälter (4) unabhängig sind und in einer Seite an Seite angrenzenden Position gehalten werden.

2. Das modulare System nach Anspruch 1, ferner umfassend ein Verbindungsmodul (50), das mit einem geschlossenen Verbindungsbehälter (51) versehen ist, der zwischen besagtem Kultivierungsbehälter (4) und besagtem Steuerbehälter (23) außerhalb davon angeordnet ist und besagte hydraulische Verbindungsmittel (12) (29), besagte pneumatische Verbindungsmittel (17) (32) und besagte elektrische Verbindungsmittel (10) (22) (33) enthält.

3. Das modulare System nach einem der vorhergehenden Ansprüche,
wobei besagter Kultivierungsbehälter (4) eine Höhe im Bereich von ungefähr 3 Metern bis ungefähr 5 Metern und / oder eine Länge im Bereich von ungefähr 30 Metern bis ungefähr 4 Metern und / oder eine Breite im Bereich von ungefähr 10 Metern bis ungefähr 20 Metern aufweist.

4. Das modulare System nach einem der vorhergehenden Ansprüche,
wobei besagter Steuerbehälter (23) eine Höhe von ungefähr 2,5 Metern und / oder eine Länge im Bereich von ungefähr 6 Metern bis ungefähr 12 Metern und / oder eine Breite von ungefähr 2,5 Metern aufweist.

5. Das modulare System nach einem der Ansprüche von 1 bis 3,
wobei besagter Steuerbehälter (23) so strukturiert und bemessen ist, dass er leicht auf Kraftfahrzeugen angeordnet und mittels dieser transportiert werden kann.

6. Das modulare System nach einem der vorhergehenden Ansprüche,
wobei besagtes Fertigationssystem (13) und besagte Fertigationseinheit (24) eine aeroponische Fertigationseinheit und/oder eine hydroponische Fertigationseinheit sind.

7. Das modulare System nach einem der vorhergehenden Ansprüche,
wobei besagte Kultivierungsparameter Parameter umfassen, die auf die Feuchtigkeit hinweisen, und/oder Parameter, die auf die Temperatur hinweisen, und/oder Parameter, die auf das Kohlendioxid hinweisen.

8. Das modulare System nach einem der vorhergehenden Ansprüche, umfassend:
ein Steuermodul (3) und zwei oder mehr Kultivierungsmodule (2);
hydraulische Verbindungsmittel (12) (29), um besagte Fertigationseinheit (24) besagten Steuermoduls (3) mit besagtem Fertigationssystem (13) jedes besagten Kultivierungsmoduls (2) zu verbinden,
pneumatische Verbindungsmittel (17) (32), um besagte Klimasteuereinheit (25) besagten Steuermoduls (3) mit besagtem Luftverteilungssystem (15) jedes besagten Kultivierungsmoduls (2) zu koppeln,
elektrische Verbindungsmittel (10) (22) (33), um besagtes elektronisches Steuersystem (26) besagten Steuermoduls (3) mit besagten Sensorvorrichtungen (8) und mit besagten Beleuchtungsvorrichtungen (16) jedes besagten Kultivierungsmoduls (2) elektrisch zu verbinden.

9. Ein Verfahren zur Herstellung eines modularen vertikalen Farmsystems (1), um pflanzliche Produkte in einem Anbaugebiet/-raum (GR) zu kultivieren, hergestellt nach einem der vorhergehenden Ansprüche, wobei das Verfahren die folgenden Schritte umfasst:
- Bilden, in Vormontagegebieten/-räumen (PK), die nicht besagtem Anbaugebiet/- raum (GR) entsprechen, erster Sätze von modularen Elementen (K1) zur Herstellung besagten Kultivierungsbehälters (4), zweiter Sätze von modularen Elementen (K2) zur Herstellung besagter Kultivierungsstrukturen (5) mit vertikaler Architektur, dritter Sätze von modularen Elementen (K3) zur Herstellung besagten Fertigationssystems (13), vierter Sätze von modularen Elementen (K4) zur Herstellung besagten Luftverteilungssystems (15);
- Transportieren besagter ersten Sätze (K1), zweiten Sätze (K2), dritten Sätze (K3) und vierten Sätze (K4) von modularen Elementen von den jeweiligen Vormontagegebieten/- räumen (PK) zu besagtem Anbaugebiet (GR);
- Bereitstellen besagten Kultivierungsbehälters (4) im besagten Anbaugebiet (GR) durch Montage der modularen Elemente der ersten Sätze (K1),
- Bereitstellen im besagten Kultivierungsbehälter (4) besagter Kultivierungsstrukturen (5) durch Montage der modularen Elemente der zweiten Sätze (K2),
- Bereitstellen besagten Fertigationssystems (13) im besagten Kultivierungsbehälter durch Montage der in den dritten Sätzen (K3) enthaltenen modularen Elemente,
- Bereitstellen im besagten Kultivierungsbehälter (4) besagten Luftverteilungssystems (15) durch Montage der in den vierten Sätzen (K4) enthaltenen modularen Elemente.

10. Das Verfahren nach Anspruch 9, umfassend die folgenden Schritte:
Anordnen besagten Steuerbehälters (23) in einem Vormontagegebiet/-raum (PZ) des Steuermoduls, das nicht besagtem Anbaugebiet/-raum (GR) entspricht;
Montieren besagter Fertigationseinheit (24), und/oder besagter Klimasteuereinheit (25), und/oder besagten elektronischen Steuersystems (26) im besagten Steuerbehälter (23) besagten Steuermoduls (3);
am Ende der Vormontage, Transportieren besagten Steuermoduls (3) von besagtem Vormontagegebiet/-raum (PZ) des Steuermoduls (3) zu besagtem Anbaugebiet/-raum (GR) und Positionieren desselben ungefähr angrenzend an besagtem Kultivierungsbehälter (4),
Verbinden besagter Fertigationseinheit (24) mit besagtem Fertigationssystem (13) mittels hydraulischer Kopplungsmittel (12) (29);
Koppeln besagter Klimasteuereinheit (25) mit besagtem Luftverteilungssystem (15) durch pneumatische Verbindungsmittel (32) (17).

## Revendications

1. Système de culture verticale modulaire pour la culture hors-sol (1) (1A) (1B) de produits végétaux, **caractérisé en ce qu'**il comprend au moins un module de culture (2) et au moins un module de commande (3),
ledit module de culture (2) comprenant :
un conteneur de culture fermé de forme sensiblement parallélépipédique (4), délimitant intérieurement un espace/milieu de culture artificiel, à l'intérieur duquel est réalisé un procédé pour la culture hors-sol de produits végétaux,
des structures de culture modulaires (5) d'architecture verticale, agencées à l'intérieur dudit conteneur de culture (4) et comprenant une pluralité de bacs de culture modulaires (7), configurés pour accueillir lesdits produits végétaux et/ou les graines respectives durant le procédé de croissance,
lesdites structures de culture (5) comprenant en outre des cadres support modulaires (6) qui sont agencés à l'intérieur dudit conteneur de culture (4) et structurés pour supporter lesdits bacs de culture (7) les uns au-dessus des autres, en positions horizontales, espacés réciproquement de manière à former des colonnes verticales d'étagères,
un système de fertigation modulaire (13) qui est agencé à l'intérieur dudit conteneur de culture (4) et est structuré pour recevoir des substances à base de fertilisant et pour alimenter sélectivement lesdits bacs de culture (7) en lesdites substances,
des dispositifs d'éclairage (16) qui sont agencés à l'intérieur dudit conteneur de culture (4) à l'emplacement desdits bacs de culture (7) pour éclairer lesdits produits végétaux,
un système de distribution d'air (15), qui est agencé à l'intérieur dudit conteneur de culture (4) et est configuré pour recevoir de l'air conditionné et l'acheminer jusqu'à l'intérieur dudit conteneur de culture (4),
des capteurs (8), qui sont agencés à l'intérieur dudit conteneur de culture (4) à l'emplacement desdits bacs de culture (7) et sont configurés pour fournir des données/signaux indiquant des paramètres de culture commandés durant le procédé de croissance,
ledit module de commande (3) comprenant :
un boîtier de commande fermé de forme sensiblement parallélépipédique (23), qui est agencé à l'extérieur dudit conteneur de culture (4) dans une position sensiblement adjacente audit conteneur de culture (4) de façon à en être à distance,
le boîtier de commande (23) comprenant intérieurement :
une unité de fertigation (24), configurée pour fournir lesdites substances à base de fertilisant, une unité de climatisation (25) configurée pour fournir de l'air conditionné, et un système de commande électronique (26),
ledit système (1) comprenant en outre :
des moyens de raccordement hydraulique (12) (29) pour raccorder ladite unité de fertigation (24) audit système de fertigation (13),
des moyens de raccordement aéraulique (17) (32) pour coupler ladite unité de climatisation (25) audit système de distribution d'air (15),
des moyens de raccordement électrique (10) (22) (33) pour raccorder électriquement ledit système de commande électronique (26) auxdits capteurs (8) et auxdits dispositifs d'éclairage (16),
ledit boîtier de commande (23) et ledit conteneur de culture (4) étant indépendants et étant maintenus dans une position adjacente côte à côte.

2. Système modulaire selon la revendication 1, comprenant en outre un module de raccordement (50) pourvu d'un boîtier de raccordement fermé (51) qui est interposé entre ledit conteneur de culture (4) et ledit boîtier de commande (23) à l'extérieur de ceux-ci et contient : lesdits moyens de raccordement hydraulique (12) (29), les moyens de raccordement aéraulique (17) (32) et lesdits moyens de raccordement électrique (10) (22) (33).

3. Système modulaire selon l'une quelconque des revendications précédentes, dans lequel ledit conteneur de culture (4) a une hauteur comprise entre environ 3 mètres et environ 5 mètres, et/ou une longueur comprise entre environ 30 mètres et environ 4 mètres, et/ou une largeur comprise entre environ 10 mètres et environ 20 mètres.

4. Système modulaire selon l'une quelconque des revendications précédentes, dans lequel ledit boîtier de commande (23) a une hauteur d'environ 2,5 mètres, et/ou une longueur comprise entre environ 6 mètres et environ 12 mètres, et/ou une largeur d'environ 2,5 mètres.

5. Système modulaire selon l'une quelconque des revendications 1 à 3, dans lequel ledit boîtier de commande (23) est structuré et dimensionné pour être facilement agencé sur des véhicules motorisés et transporté au moyen de véhicules motorisés.

6. Système modulaire selon l'une quelconque des revendications précédentes, dans lequel ledit système de fertigation (13) et ladite unité de fertigation (24) sont une unité de fertigation aéroponique et/ou une unité de fertigation hydroponique.

7. Système modulaire selon l'une quelconque des revendications précédentes, dans lequel lesdits paramètres de culture comprennent : des paramètres indicateurs de l'humidité et/ou des paramètres indicateurs de la température et/ou des paramètres indicateurs du dioxyde de carbone.

8. Système modulaire selon l'une quelconque des revendications précédentes, comprenant un module de commande (3) et au moins deux modules de culture (2) ; des moyens de raccordement hydraulique (12) (29) pour raccorder ladite unité de fertigation (24) dudit module de commande (3) audit système de fertigation (13) de chaque dit module de culture (2),
des moyens de raccordement aéraulique (17) (32) pour coupler ladite unité de climatisation (25) dudit module de commande (3) audit système de distribution d'air (15) de chaque dit module de culture (2),
des moyens de raccordement électrique (10) (22) (33) pour raccorder électriquement ledit système de commande électronique (26) dudit module de commande (3) auxdits capteurs (8) et auxdits dispositifs d'éclairage (16) de chaque dit module de culture (2).

9. Procédé de fabrication d'un système de culture verticale modulaire (1) pour cultiver des produits végétaux dans une zone/un espace de croissance (GR), réalisé selon l'une quelconque des revendications précédentes,
le procédé comprenant les étapes suivantes :
- préparation, dans des zones/espaces de préassemblage (PK) qui ne correspondent pas à ladite zone/audit espace de croissance (GR) : de premiers kits d'éléments modulaires (K1) pour la fabrication dudit conteneur de culture (4), de deuxièmes kits d'éléments modulaires (K2) pour la fabrication desdites structures de culture (5) d'architecture verticale, de troisièmes kits d'éléments modulaires (K3) pour la fabrication dudit système de fertigation (13), de quatrièmes kits d'éléments modulaires (K4) pour la fabrication dudit système de distribution d'air (15) ;
- transport desdits premiers kits (K1), deuxièmes kits (K2), troisièmes kits (K3) et quatrièmes kits (K4) d'éléments modulaires depuis les zones/espaces de préassemblage (PK) respectives/respectifs jusqu'à ladite zone de croissance (GR) ;
- fourniture dudit conteneur de culture (4) dans ladite zone de croissance (GR) par assemblage des éléments modulaires des premiers kits (K1),
- fourniture, dans ledit conteneur de culture (4), desdites structures de culture (5) par assemblage des éléments modulaires des deuxièmes kits (K2),
- fourniture, dans ledit conteneur de culture, dudit système de fertigation (13) par assemblage des éléments modulaires contenus dans les troisièmes kits (K3),
- fourniture, dans ledit conteneur de culture (4), dudit système de distribution d'air (15) par assemblage des éléments modulaires contenus dans les quatrièmes kits (K4).

10. Procédé selon la revendication 9, comprenant les étapes suivantes :
agencement dudit boîtier de commande (23) dans une zone/un espace de préassemblage (PZ) du module de commande qui ne correspond pas à ladite zone/audit espace de croissance (GR) ;
assemblage, dans ledit boîtier de commande (23), dudit module de commande (3) : ladite unité de fertigation (24) et/ou ladite unité de climatisation (25) et/ou le système de commande électronique (26) ;
à l'issue du préassemblage, transport dudit module de commande (3) depuis ladite zone/ledit espace de préassemblage (PZ) du module de commande (3) jusqu'à ladite zone/ledit espace de croissance (GR) et positionnement de celui-ci à peu près adjacent audit conteneur de culture (4),
raccordement de ladite unité de fertigation (24) audit système de fertigation (13) via des moyens de couplage hydraulique (12) (29) ;
couplage de ladite unité de climatisation (25) audit système de distribution d'air (15) par des moyens de raccordement aéraulique (32) (17).
